# EUROPEAN PATENT APPLICATION

(11) **EP 4 521 089 A1**
(43) Date of publication of application: **12.03.2025**
(21) Application number: 24199063.9
(22) Date of filing: 06.09.2024
(51) Int. Cl.: G01M 5/00, G01C 9/06

(54) **AUTONOMOUS DEVICE FOR MONITORING A BUILDING STRUCTURE STATE**

(30) Priority: 08.09.2023 CZ 20230349; 03.09.2024 CZ 20240343
(71) Applicant: INSET s.r.o., 13000 Praha 3 (CZ)
(72) Inventor: RYDL, Vaclav, Praha (CZ)
(74) Representative: Pavlica, Tomas

(57) **Abstract**

Autonomous device for monitoring a condition of a constructions, the device comprises an energy source, at least one sensor for measuring monitored data and a data transmitter, the device further comprises at least
a real time unit,
a computing unit with a processor and a working memory connected to the real time unit and said at least one sensor for measuring the monitored data
and a capacitive internal memory for data storage connected to the computing unit, wherein the computing unit is programmed for at least the following operations performed by the processor of the computing unit:
a) analyzing measured monitored data to reduce a volume of data when sending measured monitored data and creating a data transfer file from the analyzed data,
b) obtaining a time stamp, from the real time unit, corresponding to the moment of measurement of the monitored data,
c) assigning a time stamp to the measured monitored data and storing them in the internal memory,
d) assigning a time stamp to the created transfer file of the analyzed data and storing it in the capacitive internal memory,
e) sending a transfer file of the analyzed data via the first communication unit, whereby

this first communication unit is arranged for a communication in low-power networks with a low consumption and
the sensor for measuring the monitored data is at least a vibration sensor for measuring the vibration speed of the monitored building structure in three axes.

## Description

### Field of the invention

The autonomous device for long-term monitoring of the condition of s constructions is intended for a long-term monitoring of the condition of buildings and other constructions, while it is capable of sending, upon request, an information needed to evaluate this condition.

### State of the art

Currently, there are number of devices used for measuring constructions, e.g. for measuring bridge structures.

An equipment for monitoring constructions is described, for example, in a document RU 2582 233 C1 dated 25.2.2015 having a title System for measuring and long-term monitoring of the condition of building or engineering structures. The proposed system is related to a measuring technology, namely to automatic means of periodic monitoring of a condition of a construction of a building or engineering structures during its operation, which makes it possible to detect in time the excess of permissible deformations of the construction and prevent its destruction. However, this device is only designed to indicate values exceeding a preset limit, beyond which the construction may be damaged.

Another device for measuring a condition of a construction is described in a Czech utility model UV 35053 dated 30.3.2021 having a title Device for measuring the condition of a building. This technical solution refers to a field of remote monitoring of constructions, such as bridges, footbridges, roofs, towers, observation towers, transmitters. Alternatively, also assembled structures, such as scaffolding, cranes or poles of power lines. Above all, this solution can be used for bridge structures, where remote monitoring is the most essential.

However, none of the listed devices can provide accurate data on the vibration speed of the construction.

### Subject of the invention

According to this invention, an autonomous device for monitoring a condition of constructions is provided for long-term monitoring of constructions, in which at least one of the following parameters is measured: an oscillation rate of construction, a tilting of the construction and a vibration of the construction. The measured data are processed in the autonomous device, as will be described further, and are subsequently transmitted to a target storage.

According to the present invention, an autonomous device for monitoring a condition of constructions is provided containing at least a power source, at least one sensor for measuring the monitored data and a data transmitter, wherein the subject of the invention is that it further comprises a real time unit, a computing unit with a processor and a working memory connected to the real time unit and to the sensor for measuring the monitored data and an internal memory for data storage, connected to the computing unit, wherein the computing unit is programmed for at least the following actions performed by its processor:
a) analyzing measured monitored data to reduce the volume of data when sending measured monitored data and creating a data transfer file from this analyzed data,
b) from the real time unit obtaining a time stamp, corresponding to the moment of measurement of the monitored data,
c) assigning the time stamp to the measured monitored data and storing them in the internal memory,
d) assigning the time stamp to the created transfer file of the analyzed data and storing them in the internal memory,
e) sending the transfer file of the analyzed data via the communication unit, whereby the communication unit is arranged for a communication in networks with low power consumption and
the sensor for measuring the monitored data is a vibration sensor for measuring the vibration speed of the monitored construction.

According to its preferred embodiment, the autonomous device further comprises a tilt sensor for measuring a tilt of the monitored construction and a vibration sensor for measuring vibrations of the monitored construction.

According to its further advantageous embodiment, the device according to the invention is further provided with a second communication unit for sending data without data limitation for sending all stored monitored data with associated time stamps.

Advantageously, according to the present invention, an autonomous device for monitoring a condition of constructions is also provided further comprising a motherboard (logic board, base board) connected to a power source, on which at least the following components are installed:
- system-on-a-chip type processor, which contains working memory RAM and a flash memory with a program executed by this processor,
- large capacity internal memory for storing measured data,
- the real time unit (RTC),
- a GNSS module for delivering information about exact time and exact location,
- at least one analog-digital converter for converting analog monitored data,
- the first communication unit provided by an LPWAN, i.e. Low-Power Wide-Area Network, module for communication in a low-power network and
   wherein the motherboard is provided with data buses for connecting all components arranged on this motherboard for their power supply and data transmission for processing by the processor,
   wherein the motherboard is further provided at least with connectors for connecting the LPWAN module and the GNSS module with the respective antennas, and wherein the motherboard is further provided with at least one connector for connection to the sensor for measuring the monitored data,
   wherein on the flash memory a program for performing at least the following actions by the processor is stored:
      a) analyzing measured monitored data to reduce the volume of data when sending measured monitored data and creating at least one data transfer file from this analyzed data,
      b) obtaining a time stamp, corresponding to the moment of measurement of the monitored data, from the real time unit,
      c) assigning the time stamp to the measured monitored data and storing them in the large capacity internal memory,
      d) assigning the time stamp to the created at least one transfer file of the analyzed data and storing this transfer file in the large capacity internal memory,
      e) sending the data transfer file with the analyzed data via the first communication unit, wherein the first communication unit is provided for a communication in a low-power network,
   wherein the at least one sensor for measuring the monitored data is an oscillation sensor for measuring the oscillation speed of the monitored construction.

The autonomous device for monitoring the condition of constructions according to the invention is provided with the first communication unit for communication in a low-power network, which is one of the devices of the LPWAN type, i.e. Low-Power Wide-Area Network, in order to ensure its long-term autonomous operation. Particularly advantageously, the first communication unit is based on a LoRa (Long Range) technology.

For the purposes of this application, the term sensor means any suitable sensor or measuring device for measuring at least one monitored parameter. When the autonomous device comprises a motherboard, the term sensor comprises both an external sensor and an internal sensor, where external sensor means a sensor that is not arranged on the motherboard and is connected to it, e.g. by a suitable connector, wherein the term internal sensor means a sensor that it is arranged on the motherboard and is directly connected to a suitable bus. However, in the application, only the term sensor will often be used for simplicity.

According to its further preferred embodiment of the device according to the invention, the second communication unit for sending data without data limitation is a WiFi module for sending all stored monitored data with associated time stamps.

The individual parts of the autonomous device according to the invention will now be described in more detail.

### Energy source

The energy source contains at least a battery or an accumulator and a power output connected to this battery or an accumulator and adapted to power the relevant parts of the autonomous device. The power source is provided as autonomous to ensure long-term power supply of the device without the need to be powered from the mains. According to one preferred example of an autonomous device for long-term monitoring of the condition of constructions, the energy source contains an accumulator, which is provided with an independent recharging source of energy, in particular a solar cell, particularly preferably a photovoltaic cell for its recharging, a battery, and a switching unit which is connected to switching the output from the accumulator to the battery, and a power control unit that is programmed to control the charging of the accumulator from the independent recharging source and to control the switching unit to switch the output from the accumulator to the battery when the accumulator is discharged to ensure reliable power supply to the autonomous device, and also to switch back after charging the accumulator from the independent charging source. According to a particularly advantageous embodiment, the power supply control unit is arranged on the motherboard of the autonomous device according to the invention. A situation where the accumulator is discharged can occur, for example, when the independent source of energy recharging is a solar cell and the autonomous device finds itself in an environment without sunlight, e.g. snow covers the solar cell for such a time that the accumulator is discharged. In such a case, the power control unit will instruct the switching unit to switch the power supply of the autonomous device to the battery power supply. The power supply control unit is connected for communication with the computing unit of the autonomous device to enable mutual interaction, when, for example, when recharging is limited, the measurement and the transmission will be limited.

### Sensors for measuring monitored data

As already mentioned, the autonomous device according to the invention is provided with a sensor for measuring the monitored data which is a vibration sensor for measuring the vibration speed of the monitored construction. In one advantageous embodiment, the autonomous device according to the invention, in addition to the external vibration sensor for measuring the vibration speed of the monitored construction, contains at least one of the following sensors: an external tilt sensor for measuring the tilt of the monitored construction and an external vibration sensor for measuring the vibrations of the monitored construction. In another advantageous embodiment of the autonomous device according to the invention, in addition to the vibration sensor for measuring the vibration speed of the monitored construction, it comprises both a sensor for measuring the inclination of the monitored construction and a vibration sensor for measuring the vibrations of the monitored construction. In a particularly advantageous embodiment, the autonomous device contains, in addition to these variants of external sensors present in it, some of the other sensors, or combinations thereof, both external and internal. According to its yet another advantageous embodiment, the autonomous device contains, for example, an internal sensor for measuring humidity, an internal temperature sensor, or external or internal sensors for measuring other parameters, e.g. an external sensor for measuring wind speed, level of illumination, etc. It is assumed that the autonomous device can preferably contain all possible combinations of the above-mentioned external and internal sensors for measuring the monitored data, but also other sensors for measuring monitored parameters. It is clear to the expert that the monitored parameters can be directly related to the physical condition of the monitored construction (oscillation, vibration, tilt, internal temperature of the device, humidity in the device, etc.), but they can also help in evaluating its condition under certain meteorological conditions (wind speed, outdoor temperature, outdoor humidity, degree of illumination of the construction, etc.).

The vibration sensor measures the vibration speed of the monitored construction in the three axes x, y, and z in the Cartesian coordinate system. In a preferred embodiment, the device according to the invention contains three geophones as vibration sensors arranged to measure the vibration speed of the monitored construction in the three axes mentioned above. Each of the geophones measures one axis, i.e. one x-axis, one y-axis and one z-axis.

In yet preferred embodiment of the autonomous device, each of the three geophones is connected to the corresponding A/D converter for converting the analog signal from the individual geophones into a digital signal. In yet another apreferred embodiment of the autonomous device, all geophones are connected to a single A/D converter with (at least) three channels to provide conversion of the output of each individual geophone.

The advantage of an autonomous device containing geophones as vibration sensors is that it can also capture phenomena that have a very low frequency, down to a frequency of only 0.5 Hz. For measuring the vibration of the monitored construction, the most suitable frequencies are in the range of approx. 0.5Hz-100Hz. As already mentioned, the output from the geophones are analog values corresponding to each measured vibration frequency in the individual axes, possibly also the magnitude of their amplitudes, and these analog values are subsequently converted into digital signals. In order to calculate the total oscillations of the construction, it is particularly advantageous to measure the rate of oscillation of the construction with geophones, not its acceleration with accelerometers. The total deflection of the construction is given by an integral of velocity, which eliminates the inaccuracy introduced by the integration, in contrast to the acceleration measurement. The device according to the invention is created with the frequency of each channel coming out of the A/D converter with a value of 6kHz and with a resolution of 24bit, but other configurations are also possible.

From the measured vibration speed of the monitored construction, it is possible to determine, for example, the stiffness of this construction, its current load, or the stability of the construction can also be monitored, because, for example, a sudden change in the vibration speed can mean a change in the subsoil or in the strength of the construction material.

The tilt sensor measures the acceleration induced by the change in rotation of this sensor to the Earth's gravitational axis, i.e. technically said, the acceleration of the monitored construction is not measured, but a change in its rotation with respect to the Earth's gravitational field, and therefore a measurement in only two axes is sufficient. The sensor for measuring tilt is preferably a two-axis accelerometer measuring tilt in only two axes. The measurement range of the frequencies induced by the rotation of this sensor for measuring the inclination to the earth's field is particularly preferably 0-0.5hz, but it can be up to 800 Hz. Measuring the tilt of a construction provides information on whether and by how much the construction has tilted in certain direction. This information also helps to indicate a change in the stability of the monitored construction, its deflection or cracks in it, and thus makes it possible to prevent the deterioration of the defect due to timely indication. Although it is possible to measure tilts of the construction in the full range of 360°, the range of tilt measurement is preferably limited to ±30° to achieve a maximum accuracy.

The vibration sensor is preferably an accelerometer, but it can also be another measuring device, e.g. a seismoscope and others. The accelerometer measures acceleration and enables, for example, a measurement of a static gravitational acceleration, which allows determining an angle of deviation of the measured object from the vertical, but also a measurement of a dynamic acceleration due to shocks, movement, impact or vibrations. The vibration sensor is particularly preferably a three-axis accelerometer. The higher the measured vibration frequency, the more accurate the possibility of data interpretation and recalculation. The values measured by the accelerometer are the acceleration values at the measurement point, i.e. the derivative of the vibration speed at this point. The main advantage and the added value of the accelerometer is a possibility of measuring high-frequency phenomena, up to 6kHz with a sampling frequency of 26.667kHz per measured axis.

In one of its preferred embodiments the autonomous device according to the invention can be provided with a computing unit that is programmed to detect a discrepancy between the values from the oscillation sensor and from the vibration sensor to detect a possible fault on one of these sensors and for possible data correction in the event of a detected fault.

In yet another embodiment, the autonomous device according to the invention is further provided with at least one of the following additional sensors: internal temperature sensor, external temperature sensor, internal humidity sensor, anemometer as a sensor for measuring the speed and direction of the wind acting on the construction. Optionally, the autonomous device according to the invention can also be provided with a camera as an optical sensor for evaluating the origin of vibration or other phenomena, a light intensity sensor and other means enabling the determination of the origin of the given condition or the circumstances affecting it.

Knowing the current temperature makes it possible to correct the measured value of vibrations and tilt according to fluctuations in temperature conditions. E.g. the change in tilt usually correlates with changes in temperature, where the construction moves by tenths of a degree due to uneven sunlight. Using temperature information, it is possible to perform temperature compensation of measured values for their correction and recognition of natural fluctuations from unexpected ones.

Humidity can be measured at a request of the user with an internal humidity sensor, this is an internal sensor that serves as an auxiliary improvement of temperature-induced dew point detection.

Temperature and humidity readings are related to yaw rate, vibration and pitch readings - they can identify correlated phenomena. The oscillation speed should have a similar course as the vibration, but the oscillation speed and vibration are not related to the tilt values in any way.

It is clear to an expert that the autonomous device according to the invention may contain any mutual combination of the above-mentioned sensors and possibly other sensors. The listed combinations of sensors therefore serve only as an example, not as a limitation.

In yet another preferred embodiment, the device according to the invention is provided with an internal converter for other external sensors with an analog output and/or is provided with an RS485 chip for connecting external sensors with a digital output.

### Real time unit

A real time unit, also called a "Real Time Clock", is an electronic device that is designed to keep accurate time throughout the day, being used to create time stamps associated with measured data. In its preferred embodiment, the real time unit is synchronized using a global navigation satellite system GNSS, e.g. GPS, Galileo, GLONASS, and others. The real time unit allows for adding a time stamp to all records showing the exact time they were created. Thanks to this, it is possible to determine the time of occurrence of values from individual sensors of the autonomous device with an accuracy of one millisecond. The real-time unit maintains time information independently of the main computing unit. Preferably, the real time unit is provided with its own backup battery, thanks to which it retains information about the current time even when the rest of the device is without power, e.g. in sleep mode, etc., or in the event of a power failure from the power source.

### Computing unit

The computing unit of the autonomous device is provided with a processor and a working memory. Preferably, the choice of the processor and the number of its cores is determined depending on the defined requirements for monitoring as well as on the expected amount of data and frequency of data measurement and is not the subject of the invention. The working memory of the computing unit is arranged both for a short-term storage of data obtained by measurements and data from the evaluation (analysis) of monitored data when performing analysis of measurement data, and also for storing a software provided to control the processor for performing the required tasks of the computing unit of the autonomous device, including performing the required data analysis, creating a data transfer file from the analyzed data; to control the relevant sensors; to create a time stamp indicating the moment of measurement and to provide the relevant measured data and the relevant data transfer file with this time stamp, and further to control the first communication unit for communication in a low-energy power. According to another preferred embodiment, it stores a token required for a communication with the target storage. In accordance with this invention, the computing unit is a system-on-chip (SOC) type processor, which contains a RAM working memory and a flash memory with a program executed by this processor.

The main task of the computing unit is to create a transmission data file that will contain all the necessary data for monitoring, but will be of a size that allows it to reduce as much as possible the energy consumption required for such transmission and be sent to the destination storage via the first communication unit for communication in a low-power network, which will be described below.

The computing unit is therefore programmed at least for:
a) performing data analysis from measured monitored data with an aim of reducing a volume of data providing information on the current condition of the monitored construction during future transmission of this data,
b) creating a transfer data file from the analyzed data from step a)
c) obtaining, from the real time unit, a time stamp corresponding to the moment of measurement of the monitored data,
d) assigning a time stamp to the measured monitored data and to the created transmission data file, and
e) saving the measured monitored data and the created transfer data file,
f) sending the transmission data file via the first communication unit.

The computing unit of the autonomous device according to the invention performs data analysis enabling a reduction of the flow of data sent in the transmission data file from the autonomous device so that as much information as possible about the condition of the construction can be sent via the first communication unit for communication in a low-power network to the destination. Communication units for communication in low-power networks are not created for sending a large volume of data, in addition, the consumption of the communication unit increases with the volume of transmitted data, so it is advantageous to transmit as little data as possible. The goal is to create the computing unit so to reduce the volume of data as much as possible by performing a suitable basic analysis of the measured data by this computing unit. The computing unit is therefore programmed to carry out such a basic analysis of the measured data on site, which enables the creation of a set of analyzed data providing the necessary information about the current condition of the monitored construction, while the set of data created in this way has such a small volume of data that it can be sent via the first communication unit for communication in a low-power network. The computing unit itself is provided with such a processor, the low consumption of which enables the necessary long-term operation of the autonomous device according to the invention when it is powered from an autonomous energy source. The file of analyzed data created by the computing unit for sending via the low-power network is preferably sent by the first communication unit to a suitable target storage, for example to a cloud application located in the low-power network. In the target storage, the data can subsequently be displayed as desired and further necessary analyzes can be performed on them in software programs intended for this purpose, etc.

Examples of data analysis performed by the computing unit will now be given:
a) analysis of data obtained from tilt measurement sensors: the obtained data first pass through a low-pass filter and are processed by statistical analysis to remove noise, then the tilting trend is evaluated, i.e. whether the tilt is increasing or decreasing and derivation of the data is performed to detect the change itself.
b) analysis of data obtained from vibration measurement sensors: the obtained data is subjected to a Fourier transformation to find the dominant frequencies in the target pre-selected frequency spectra, followed by the calculation of spectral lines for the local detection of the trend of frequency changes of the construction, data filtering according to the type by a low-pass filter or by a high-pass filter and a statistical detection of anomalies and changes in trends in the data flow,
c) analysis of data from the vibration measurement sensor: the obtained data is subjected to Fourier transformation to find the dominant frequencies in the target pre-selected frequency spectra, followed by a calculation of spectral lines for a local detection of the trend of frequency changes of the construction, data filtering according to the type by a low-pass filter or by a high-pass filter and statistical detection of anomalies and changes in trends in the data flow.

The computing unit is further programmed to obtain, from the real time unit, information about the exact moment of data measurement. According to one preferred embodiment, the device according to the invention is provided with a computing unit which is provided to receive information about the exact time from an external source of real time, for example from a GNSS unit, DCF77 or from another source of precise or uniform time, from which it transmits such information to the real time unit in the autonomous device according to the invention for its required synchronization with the actual precise time, i.e. by GNSS time for example. According to another preferred embodiment of the device according to the invention, the computing unit is then provided to obtain the real time both from the real time unit in the autonomous device and from the GNSS unit. Furthermore, the computing unit is preferably programmed to assign an exact geolocation of the place where the autonomous device is located to the measured values and time stamps. Thanks to this assignment, it is possible to monitor not only static, but also dynamic phenomena in several constructions provided with the relevant autonomous devices according to the invention, and subsequently analyze the construction as a whole in the target storage, not just in one specific point. Preferably, the computing unit is then connected to at least one suitable temperature sensor and/or hygrometer and is programmed to calculate temperature compensation and to correct the measured values according to changes in temperature conditions, possibly humidity.

As already mentioned, the computing unit is programmed for a partial evaluation directly at site in the autonomous device, for example in the case of vibrations, the computing unit is preferably programmed for the calculation of the total movement of the measured construction.

In addition to processing the measured data, the computing unit is preferably further programmed to detect and to send comprehensive information about the device's status, e.g. battery voltage, accumulator voltage, light intensity and firmware status.

According to its further preferred embodiment, the autonomous device according to the invention can have a computing unit programmed to ensure at least one of the following types of data measurement by the sensor, or sensors of the autonomous device according to the invention: continuous data measurement, time-limited measurement and wake-up measurement, while in the remaining time, i.e. in the intermediate time between the wake-up state, the autonomous device is put into sleep mode to reduce its consumption. According to its yet another preferred embodiment, the autonomous device according to the invention is arranged to switch between at least two of these measurement modes.

The continuous measurement mode provides continuous information about the monitored construction and avoids a situation when the autonomous device would not provide any important data about the situation that would occur when the data was not measured. Thanks to the knowledge of the history, the continuous supply of data makes it possible to capture, for example, phenomena that only manifest themselves after a longer period of time - for example, a frequency wave that passes through the construction in a few tens of minutes.

The wake-up measurement mode provides data measurement by repeatedly switching data measurement on and off by the autonomous device of the invention according to user-set input conditions. This mode can be used, for example, to measure constructions where data measurement is only required in a situation where the values exceed a pre-set threshold value, or in a situation where a certain physical phenomenon occurs, etc. An autonomous device can also be provided to activate the measurement by an external signal pulse etc.

The time-limited measurement mode provides data measurement only in a certain time-limited section, if continuous measurement is not required, which allows to reduce the requirements on the power source of the autonomous device or, for example, allows to increase the frequency of sending files of analyzed data, which in the case of continuous measurement would drain too much of the power source autonomous device according to the invention.

According to yet another preferred embodiment of the autonomous device according to the invention, the computing unit can be further programmed to correct the measured values of vibration and tilt depending on the change in the internal temperature of the autonomous device according to the invention. This is because temperature and humidity values are related to the oscillation speed, vibration and tilt values and can identify correlated phenomena. E.g. the change in tilt usually correlates with changes in the temperature of the construction, when the construction moves by tenths of a degree due to uneven sunlight. The rate of oscillation should be similar to the vibration. Oscillation speed and vibration are in no way related to tilt values. The computing unit is therefore advantageously programmed to calculate the compensation of the values measured by the sensor depending on the knowledge of the internal temperature of the autonomous device at the moment of measuring the tilt or other values and for their correction to exclude the influence of temperature. Thanks to the correction of the measured values, it is thus possible to recognize natural fluctuations in the measured values from unexpected ones. The computing unit can also be programmed to improve the detection of the temperature dew point based on the knowledge of the humidity value in the device and the temperature in it.

According to yet another preferred embodiment of the autonomous device, the computing unit is programmed to detect tampering with the device (e.g., fall, theft, transfer), when this tampering is detected using GNSS geolocation and an accelerometer. The accelerometer, for example, detects movement when the device is picked up.

The computing unit and the first communication unit for ensuring communication between the autonomous device according to the invention and the target storage are, according to one particularly preferred embodiment of the autonomous device according to the invention, designed to encrypt the sent data in digital form so that they cannot be distorted. Each autonomous device according to the invention is thus assigned with its own unique key for unambiguous identification of the data sent by it. The computing unit is particularly advantageously designed to provide communication between the unit and the target storage using a token unique to each unit. So the target storage will only store data with the correct token, discarding others immediately. This is especially important if public data networks that can be accessed by other users will be used for communication, so token verification is necessary for data validation.

According to its further preferred embodiment, the autonomous device according to the invention is designed for encryption of data stored in a large capacity internal memory.

The autonomous device is advantageously designed to resend the transmission data file in the event that it does not arrive at the receiving location. Since the device also stores data locally, in the event of a communication path failure of several days, the measurement data will not be lost, as it can be sent back again.

### Large capacity internal memory

The device itself has a working memory RAM in the computing unit (in the order of a MB unit) and a large capacity internal memory with a size that allows storing all measured and calculated data, including time stamps. The internal large capacity memory is a flash memory and is optionally made up of a removable large capacity storage medium, which in one preferred embodiment of the autonomous device according to the invention is, for example, a SD, miniSD or microSD format memory card, but it can be any other removable storage medium. According to yet another preferred embodiment of the autonomous device according to the invention, the large capacity internal memory is an EMMC memory that is built directly into the motherboard.

Preferably, the internal memory capacity can be in the size of 128 GB, 256 GB or 512 GB, but also larger or smaller depending on the requirements for the amount of stored data.

The frequency of sending data is configurable according to the needs of a specific measurement. Due to the fact that connecting to the target data storage is an operation requiring certain energy, the computing unit is programmed to send data via the first communication unit only in predetermined situations, e.g. at a certain time, when a certain situation occurs, etc. In cases of continuous measurement, it will be sent e.g. once per hour; in cases of time-limited measurement the data can also be sent once per second as there is no need to consider the life of the battery or accumulator. The specific maximum frequency for a given measurement can be calculated on the basis of the expected time, the amount of data required and the associated energy demand and the expected lighting conditions.

According to its yet another preferred embodiment example, the autonomous device is designed to store data in the large capacity internal memory until its capacity is filled, then it starts erasing the oldest data to set aside space for measuring the new in a First In-First Out system.

### Communication units

To ensure a long-term autonomous operation, the autonomous device for monitoring the condition of constructions is provided with the first communication unit for a communication in a low-power network. The first communication unit is some of the devices of the LPWAN type, i.e. Low-Power Wide-Area Network. The communication unit is particularly advantageously based on LoRa technology, but it can also be any other LPWAN type device. Both the first communication unit and the target storage are particularly advantageously designed for both sending and receiving data and commands.

According to its yet another preferred embodiment, the autonomous device is provided with a second communication unit for sending data without data limitation to send all the data stored in the large capacity internal memory on demand.

In another preferred embodiment of the invention, the first communication unit may also contain a signal amplifier for respective frequency spectrums.

Each communication unit is connected to at least one antenna for sending data in the relevant frequency spectrum. Preferably it is connected to other antennas for other frequency spectra.

### Motherboard

The motherboard, also called logical board, preferably forms a basis of the autonomous unit. It is connected to a power source and has at least the following components provided on it:
- system-on-a-chip type processor, which contains working memory RAM and flash memory with the program executable by this processor,
- large capacity internal memory for storing measured data,
- real time unit RTC,
- GNSS module to deliver information about exact time and exact location,
- at least one analog-digital converter for converting analog monitored data,
- first communication unit formed by an LPWAN, i.e. Low-Power Wide-Area Network, module for a communication in a low-power network, and
   wherein the motherboard is provided with buses for connecting all components arranged on this motherboard for their power supply and data transmission for processing by the processor,
   wherein the motherboard is further provided with at least connectors for connecting the LPWAN module and the GNSS module with the respective antennas, and wherein the motherboard is further provided with at least one connector for connection to the sensor for measuring the monitored data.

As a preferred example of the embodiment of an autonomous device, the motherboard is provided with at least one control element for switching the said at least one sensor for measuring the monitored data. Preferably it is provided with control elements for switching on those components that can be disconnected in the sleep mode to save electricity.

A fundamental advantage of the autonomous device according to the invention is a possibility to install this device on objects that have not been monitored at all so far and to continuously monitor them without the need for a physical visit by trained employees. Thanks to the ability to send long-term data files remotely, the device will allow early detection of design changes and technical defects, saving time and costs. When the autonomous device is provided with an energy source with a solar panel for recharging the accumulators, the life of the autonomous device is basically limited only by the life of the components themselves, while a life of up to 25 years of operation without physical intervention is expected.

The autonomous device according to the invention is preferably arranged in a cover made of metal or plastic. The device according to the invention, in yet another preferred embodiment, is arranged in a cover, which is designed as a Faraday cage preventing the influence of the surrounding electric or magnetic field on its function. The cover is particularly advantageously made of aluminum. Optionally, the device can be made waterproof, for example with IP67 certification. Optionally, it can also be manufactured with a chemical resistance, ensured by a protective coating. Optionally, it can also be delivered with radiation protection and approval for installation within nuclear power plants.

The device can be attached to the construction to be measured by screwing, using metal Bandimex straps and the like, welding or glueing, or an optional device mounting plate can be attached to its underside, which will be adapted to the needs of the construction (e.g. provided with screw holes, strap loop, rounding), etc. In some cases, it is also possible to anchor the device with a glue or an adhesive tape. It is also possible to influence the shape of the device by adding plastic parts outside the cover.

The device according to the invention is suitable for a use on all constructions, ideally those where the access of human workers is difficult - e.g. high-rise buildings, bridges over the river, power poles, nuclear power plants, etc. In the case of time-limited measurements, the device can also be used underground, provided that it is possible to establish a reliable link between the first communication unit of the device and the target repository.

Building standards are defined towards the rate of oscillation and not the acceleration. The device according to the invention thus enables long-term monitoring of the condition of the construction with respect to the stressing of the construction by oscillation, while providing a direct measurement of the oscillation speed and thus a direct measurement of the quantity given by the standards. In addition, however, it advantageously enables a number of other measurements that can monitor the complex condition and behavior of the said construction over the long term.

### Brief description of drawings

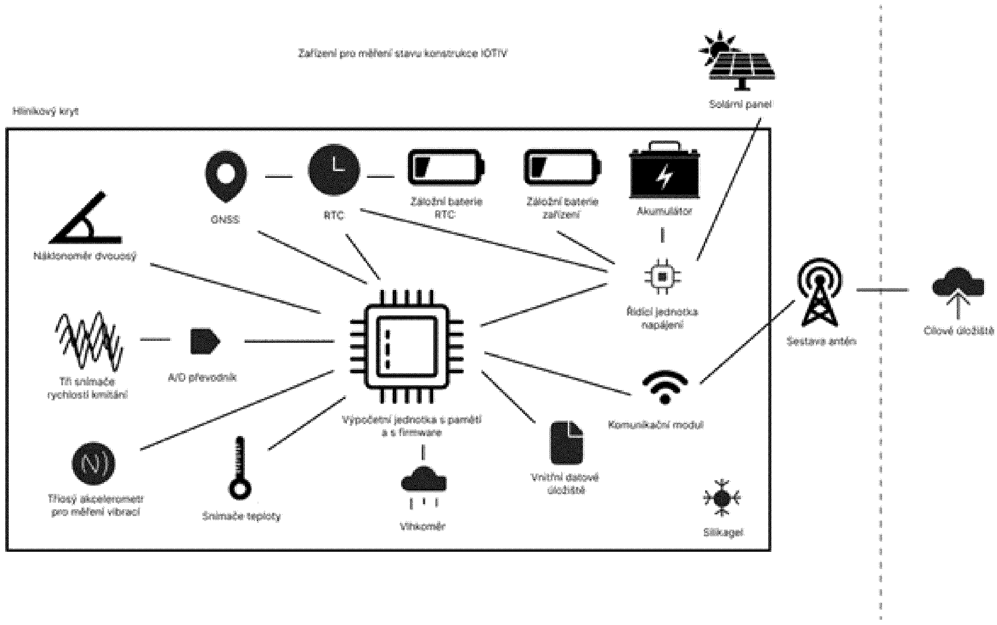

For a better understanding of this invention, and to show more clearly how it can be implemented, reference will now be made to the attached drawings, where Fig. 1 shows a diagram showing the individual parts of the autonomous device according to the invention and its communication with an external target storage.

### Examples of embodiment of the invention

In order to avoid unnecessary presentation of information and repetition of text in this description, some features are described only in relation to one form, one example, form or embodiment of this invention. It is necessary to understand in the description of the examples of embodiment of the invention that the features described in relation to one example of an preferred embodiment of the invention can be used, where this is technically possible, in all other forms or implementations of the invention and that the features described in relation to one example of a preferred embodiment may be combined with features in any at least one other preferred embodiment.

The drawing is schematic only and is not intended to limit the scope of protection of the invention to the illustrated embodiment. In the drawings, the size of some elements may be exaggerated for illustrative purposes and these may not be drawn to scale. The dimensions of the individual elements may not correspond to their actual dimensions when applying the invention.

An example of a possible embodiment of an autonomous device for monitoring the condition of constructions according to the present invention is presented in Fig. 1 and comprises a power source, a computing unit, a sensor for measuring the speed of oscillation, a sensor for measuring tilt, a sensor for measuring vibrations, an internal temperature sensor, an internal humidity sensor , the first communication unit and the real time unit.

According to its first embodiment, the autonomous device according to the invention is built on a proprietary motherboard and contains a computing unit provided by a SOC (System On Chip) system with a processor, a large capacity internal memory of the EMMC type, a working memory RAM with a random access, a real time unit RTC (Real time Clock), a multiplexer to increase the number of processor pins, a three-channel A/D converter, an internal temperature sensor and a humidity sensor, a LoRa (Long Range) communication module as the first LPWAN-type communication unit, a GPS module forming the GNSS unit, power switching transistors of individual components, voltage stabilizers, antenna connectors, a connector for connecting a sensor for measuring the rate of oscillation, a service connector and a connector for downloading data, the sensor providing data for processing being in this example embodiment a sensor for measuring the rate of oscillation. It is clear to a person skilled in the art that the individual components of the autonomous device according to the invention are connected to their respective power supply and are connected to the processor via I2C, UART and SPI buses, which will not be described in detail here.

In this example of the embodiment of the invention, the computing unit is formed by an ESP32-S3 processor, which contains two computing cores, and it is a SOC computing unit, which contains a working memory RAM of 8MB and a flash memory of 16MB for storing a firmware to perform the necessary operations as defined below. This processor is also provided with modules for WiFi, Bluetooth and its own RTC real time unit. The computing unit uses the aforementioned large capacity internal memory of the EMMC type, arranged on the motherboard, to store the measured data.

The processor's own RTC unit is corrected by an external RTC unit on the motherboard. The real-time RTC unit on the motherboard is connected to the GNSS module, which is a source for it of an accurate time signal obtained from the GNSS signal, which, in this example, is the Global Positioning System GPS. The real-time RTC unit on the motherboard is thus continuously synchronized with by the time obtained from the GNSS module. The computing unit, which in this embodiment is also programmed for a communication with the GNSS module, is further arranged for adding time stamps to the stored measured data and to the analyzed data set, as well as for adding markers about the location of the given autonomous device.

A four-channel A/D converter is also connected to the processor of the computing unit using the SPI bus. The processor of the computing unit is further connected via the UART bus to the USB controller, which operates the service connector. The data download connector is connected directly to the CPU pins. It is clear to an expert that the mentioned type of processor and memory and other components serve only as an example, while for example the type of processor and also the number of its cores depend on the defined needs of the customer, the expected amount of data and the frequency of data measurement.

In this example, the first communication unit is the implementation of a LoRa communication module from the manufacturer Seedstudio, namely the LoRa E5 module, which is arranged on the motherboard and is connected via the UART bus to the computing unit, while inside this module there is a Semtech radio, a thermometer and an STM processor. In the example, the LoRa communication module for sending via a low-power network is connected via a connector to the appropriate antenna for communication in the LoRa network, to which the target storage is wirelessly connected. Both the first communication unit, the LoRa communication module, and the target storage are preferably designed for sending and receiving data and commands. It is clear to the expert that the communication protocol and the associated composition of the antenna assembly is chosen according to the needs of the user and the location of the measurement. In this embodiment, the second communication unit is a built-in WiFi module.

The target storage is any remote computing device that has the ability to receive and send data from the communication module. Such a device can be, for example, a server application with software that can decrypt and save the measured data, and a storage that can save and persistently store the data. However, it does not have to be a server application, but, for example, a laptop with a desktop application that can work with data, or a mobile phone. The software on the target repository is not part of the standalone device (although it may be provided together).

The large capacity internal memory, which is said EMMC memory, has a size of 512GB in this example embodiment, but can be any other suitable size. The computing unit stores the evaluated data on this internal data storage. At the moment of data transfer to the target storage, the computing unit reads the data from the internal data storage and sends the encrypted data via the communication module. The internal data storage is non-removable in the basic assembly, it can optionally be attached removable.

In this example, the sensor for measuring the oscillation speed is provided by three geophones arranged to measure the oscillation speed in the individual axes x, y, from the Cartesian coordinate system, while their frequency measurement range is 0.3Hz-100Hz. In case of these frequencies, relatively small oscillations are dealt with, the so-called back and forth oscillations, i.e. a change in the sign of the acceleration. Therefore, for the subsequent calculation of the total deflections, it is very convenient to measure the speed, not the acceleration, because the total deflection is the integral of the speed (which is the integral of the acceleration). This eliminates inaccuracies caused by an integration necessary when measuring the speed of oscillation with the help of accelerometers.

Each geophone is connected to its own A/D converter channel to convert the output analog signal to a digital signal, leaving the fourth A/D converter channel unused.

The energy source in this example of an autonomous device embodiment is a 30 Ah accumulator.

The autonomous device according to this embodiment of the invention is arranged in an aluminum housing. The housing houses an array of antennas that send measured data and information to an external target storage. A solar energy source panel is also attached to the cover so that it can receive energy from the sun.

According to another embodiment, the autonomous device according to the invention contains all the components as in the first embodiment, so they will not be described in detail here. The proprietary motherboard therefore contains a SOC with a processor, a working memory RAM and flash memory for storing firmware, large capacity internal memory of the EMMC type, a real time unit RTC, a four-channel AD converter, an internal temperature and humidity sensor, a LoRa module as the first communication module, a GPS module as GNSS unit, transistors for switching the power supply of individual components, voltage stabilizers, connectors for connecting sensors and antenna connectors, a service connector and a connector for downloading data, while also containing an LTE communication module with an electronic SIM card, an MPPT maximum power monitoring unit for accumulator charging, solar panel sensors described below. The autonomous device according to this embodiment contains an energy source made up of an 18.5 Ah backup battery and a 30 Ah accumulator connected to a solar cell arranged on the cover of the autonomous device for recharging it with sunlight. In this example, the autonomous device is further provided with a power supply control unit, which is arranged to control the charging of the accumulator and to switch to the backup battery when it is discharged. The power supply control unit is programmed to switch the power supply of individual components of the device, to control the power supply from the battery in case of discharge of the accumulator and to switch the power supply to the battery, the accumulator or its recharging from the solar panel. It would of course be possible to include the activities performed by the power supply control unit in the computing unit but providing a separate power supply control unit is advantageous in terms of consumption, the chip just controlling the power supply has by order of a magnitude lower consumption and its function is also not threatened by possible software errors in the computing unit.

In this embodiment, the autonomous device according to the invention is provided with a second WiFi communication unit, which in this example is part of the SOC processor. The device according to this embodiment also contains a third communication unit, which is an LTE module connected to an electronic SIM card e-SIM, which is connected to a computing unit using an SPI bus. The GPS module is connected to the processor using the I2C bus and it is a U-BLOX module. All the mentioned parts are then connected to UFL connectors for connecting the respective antennas.

The energy source of this example of the embodiment of an autonomous device according to the invention contains an accumulator made up of eight Li-ion cells of the 21700 type in the 8P1S configuration, a backup battery of two D-type cells using Li-SoCl technology in the 2P1S configuration, an MPPT maximum power monitoring module for recharging the accumulator, voltage stabilizers and components for switching the voltage for individual components, they can then be powered only when they are used, which contributes to the low consumption of the device. The MPPT module communicates with the computing unit using the I2C bus. Based on the condition of the batteries, the time and the voltage of the solar panel, the device automatically selects the most favorable energy mode.

Internal temperature sensors, an inclinometer for sensing inclination and an accelerometer for sensing acceleration are connected to the motherboard via the I2C bus. The external inclinometer and accelerometer sensors are arranged on the sensor board, which is attached to the bottom of the cover and is connected to the motherboard via connectors. The device also contains three geophones with analog output (one geophone for each axis X, Y, Z), which are connected via a connector to the individual channels of the AD converter.

In this embodiment, the autonomous device according to the invention is provided with three internal temperature sensors. These are arranged to measure the temperature inside the device according to the invention in its upper part, immediately under the cover, then in the middle part and finally directly on the bottom inside of the device. In this embodiment, the computing unit is programmed for temperature correction of external rapid influences, which are mainly direct sunlight, gradual cooling of the construction compared to rapid changes in air temperature, and others. The set of temperature sensors used has a temperature measurement range from -40°C to +80°C and values can be read with a reading frequency of 0.5Hz or higher.

A sensor for measuring humidity is arranged inside the cover of the device, while the computing unit is also programmed to detect the dew point using the data from this humidity sensor.

The GNSS unit, which in this case is the GPS Global Positioning System unit, transmits geolocation and precise time data through the computing unit for synchronization with the real time unit. It passes information about the time stamp to the computing unit. The computing unit adds the timestamp and geolocation information to the measured values from the three oscillation speed sensors, the inclinometer, the accelerometer, the temperature sensors and the hygrometer. The information from the GNSS unit is also used to control a device theft. The real time unit is connected to the power supply from the power supply control unit. In the event of a power failure, it switches to real-time unit battery backup power to avoid loss of timestamp data.

The battery has a size of 18.5 Ah, while the accumulator has a size of 30 Ah and is connected to the solar panel via the power control unit. The power control unit is arranged to decide on the transfer of energy from the solar panels to the accumulator and to monitor the self-discharge of the accumulator. In case of lack of energy in the accumulator, the control unit switches the energy supply to the battery and sends a signal about the change to the computing unit. In case of recovery of energy in the accumulator, the power control unit switches the source back.

The memory of the computing unit is used to load the measured data, which needs to be recalculated before the storage and encrypted before sending, to store the software necessary for measuring and evaluating the data and to control the sensors in the device (firmware), the drivers of the communication unit and to store the token needed to communicate with the target storage. The Fourier transformation is performed on the data measured from the geophones and from the 3-axis accelerometer, it makes no sense to do it on the 2-axis acc, because at these very low frequencies the maximum measured displacement / inclination is much more telling than the spectrum of measured values. When evaluating on the unit, data is taken from the FFT for evaluation in the 0-100Hz spectrum from geophones, higher frequencies from the 3-axis accelerometer, when evaluating off-line, measured data from all sensors in all measured spectra are taken as part of interpretation and anomaly detection.

It should be noted that the term "comprise" used in the claims shall not be construed as limiting the terms set forth below; therefore, additional elements or steps are not excluded. It must therefore be interpreted as indicating the featured feature, whole, steps or parts to which it refers, but does not exclude the presence or supply of one or more other features, wholes, steps or components, or groups thereof. Similarly, the scope of the expression "a device comprising means A and B" should not be limited to a device composed only of components A and B. With regard to the present invention, this means that the only relevant components of the device are A and B.

The present invention has been described by means of specific examples of embodiment and with reference to the attached drawing. However, it is not intended to limit the invention to a certain described embodiment, which serves only to facilitate the understanding of the essence of the invention. The invention is limited only by the appended claims. In addition, it will be clear to a person skilled in the art that it is possible to create realistic examples of embodiment, including possible mutual combinations, which are intended as if they were contained in the section of examples of the invention, on the basis of the description of examples of preferred embodiments in the section of the Examples of the embodiment of the invention.

## Claims

**1.** Autonomous device for monitoring a condition of a constructions, the device comprises an energy source, at least one sensor for measuring monitored data and a data transmitter, **characterized in that** it further comprises at least
a real time unit,
a computing unit with a processor and a working memory connected to the real time unit and said at least one sensor for measuring the monitored data
and a capacitive internal memory for data storage connected to the computing unit, wherein the computing unit is programmed for at least the following operations performed by the processor of the computing unit:
a) analyzing measured monitored data to reduce a volume of data when sending measured monitored data and creating a data transfer file from the analyzed data,
b) obtaining a time stamp, from the real time unit, corresponding to the moment of measurement of the monitored data,
c) assigning a time stamp to the measured monitored data and storing them in the internal memory,
d) assigning a time stamp to the created transfer file of the analyzed data and storing it in the capacitive internal memory,
e) sending a transfer file of the analyzed data via the first communication unit, whereby this first communication unit is arranged for a communication in low-power networks with a low consumption and
the sensor for measuring the monitored data is at least a vibration sensor for measuring the vibration speed of the monitored building structure in three axes.

**2.** Autonomous device for monitoring a condition of a construction according to claim 1, **characterized in that** the sensor for measuring the monitored data is further a tilt sensor in at least two axes for measuring the tilt of the monitored building structure in these two axes and/or a vibration sensor in three axes for measuring the vibrations of the monitored building structure in these axes.

**3.** Autonomous device for monitoring a condition of a construction according to claim 1 or 2, **characterized in that** it contains at least a motherboard connected to a power source, on which at least the following components are provided on:
- a computing unit provided by a system-on-a-chip type processor, which comprises a working memory RAM and flash memory containing a program of actions performed by this processor,
- a large capacity internal memory for storing measured data,
- a RTC real time unit,
- a GNSS unit for providing information about exact time and exact position,
- an analog-digital converter for converting analog monitored data to digital,
- the first communication unit is provided by an LPWAN wireless transmission unit over a long distance,
wherein the motherboard is provided with buses for powering all components arranged on this motherboard and for a transmission of the measured monitored data to be processed by the processor and for their storage, and the motherboard is also provided with at least one connector for connecting the motherboard to at least one external sensor for measuring the monitored data, whereby this at least one sensor for measuring the monitored data is the vibration speed sensor for measuring the vibration speed of the monitored construction in three axes,
wherein the flash memory contains a program for performing at least the mentioned operations by the processor of the computing unit.

**5.** Autonomous device according to claim 4, **characterized in that** the motherboard is provided with at least one connector for connecting an external sensor for measuring monitored data and control elements for switching at least each external sensor for measuring monitored data, and/or the control board is provided with at least connectors for connecting the first communication unit and the GNSS unit to the respective antennas.

**6.** Autonomous device according to any one of claims 1 to 5, **characterized in that** the first communication unit is a LoRa unit.

**7.** An autonomous device according to any one of claims 1 to 7, **characterized in that** it is provided with a second communication unit for data communication without data volume limitation, while the computing unit is further programmed to send all stored data via the second communication unit upon receiving an instruction to sending.

**8.** Autonomous device according to claim 7, **characterized in that** the second communication unit is a communication unit for WiFi communication.

**9.** An autonomous device according to any one of claims 3 to 8, **characterized in that** at least one temperature sensor, an inclinometer for sensing inclination and an accelerometer for sensing acceleration are connected to the motherboard via the I2C bus.

**10.** An autonomous device according to any one of claims 1 to 7, **characterized in that** the processor of the computing unit is further programmed for time-limited measurements in the awake state and for entering at least a sleep mode with reduced consumption in the remaining time, while the awakening is carried out according to the user's adjustable conditions.

**11.** An autonomous device according to any one of claims 1 to 10, **characterized in that** the energy source contains both an accumulator and a backup battery, and further contains a solar panel and a power supply control unit, wherein the power supply control unit is programmed to decide on the transfer of energy from solar panels to the accumulator and monitoring the self-discharge of the accumulator, while in the event of a lack of energy in the accumulator, the power supply control unit is programmed to switch the power to the backup battery and send a signal about this change to the computing unit, and in the event of energy recovery in the accumulator to switch the power to the accumulator and send a signal about this change to the computing unit.

**12.** An autonomous device according to any one of claims 1 to 11, **characterized in that** it is arranged in an aluminum cover to form a Faraday cage.

**13.** An autonomous device according to any one of claims 1 to 8, **characterized in that** the processor of the computing unit is further programmed to detect a discrepancy between the values from the oscillation sensor and from the vibration sensor by the computing unit to detect a possible defect in one of these sensors and to correct the data if necessary when the defect is detected.

**14.** An autonomous device according to any one of claims 1 to 13, **characterized in that** the large capacity internal memory is an EMMC memory or a memory card.
